# EUROPÄISCHE PATENTSCHRIFT

(11) **EP 2 694 257 B1**
(45) Veröffentlichungstag und Bekanntmachung des Hinweises auf die Patenterteilung: **01.05.2019**
(21) Anmeldenummer: 12713668.7
(22) Anmeldetag: 29.03.2012
(51) Int. Cl.: B25J 19/00, H02G 11/00

(54) **FÜHRUNGSSYSTEM FÜR VERSORGUNGSLEITUNGEN UND ROBOTER MIT FÜHRUNGSSYSTEM**
GUIDE SYSTEM FOR SUPPLY LINES AND ROBOT HAVING A GUIDE SYSTEM
SYSTÈME DE GUIDAGE POUR LIGNES D'ALIMENTATION ET ROBOT POURVU D'UN SYSTÈME DE GUIDAGE

(30) Priorität: 01.04.2011 DE 202011004786 U
(43) Veröffentlichungstag der Anmeldung: 12.02.2014
(60) Teilanmeldung: 18180303.2
(73) Patentinhaber: Igus GmbH, 51147 Köln (DE)
(72) Erfinder: HERMEY, Andreas, 53773 Hennef (DE); STEEGER, Ralf, 53797 Lohmar (DE)
(74) Vertreter: Lippert Stachow Patentanwälte Rechtsanwälte
(86) Internationale Anmeldenummer: PCT/EP2012/055715
(87) Internationale Veröffentlichungsnummer: WO 2012/130994

(56) Entgegenhaltungen:
- WO-A1-97/39505
- DE-A1-102009 037 515

## Beschreibung

Die Erfindung betrifft ein Führungssystem für Versorgungsleitungen für ein Handhabungsgerät, insbesondere für einen Industrieroboter, mit einer Basis und einem ketten-, schlauch- oder bandartigen Strang, in oder an dem die Versorgungsleitungen anordenbar sind, wobei der Strang zum Längenausgleich in einem Ausgleichsabschnitt in zwei über einen Umlenkbogen miteinander verbundenen Trumen mit jeweils einem endseitigen Anschlusspunkt, einem zu der Basis des Führungssystems stationären ersten Anschlusspunkt und einem zu der Basis bewegbaren zweiten Anschlusspunkt, geführt angeordnet ist, der zweite Anschlusspunkt relativ zum ersten Anschlusspunkt über einen Verfahrweg zwischen einer Auslenkposition, in der der Strang ausgefahren ist, und einer Rückstellposition, in der Strang eingefahren ist, hin und her verfahrbar ist und das Führungssystem eine Rückstellvorrichtung zur Rückstellung des Stranges in die Rückstellposition hinein aufweist, die Rückstellvorrichtung eine Umlenkungsführung mit einem Umlenkelement aufweist, an dem sich der Umlenkbogen zu seiner Führung über den Verfahrweg seitlich abstützt, wobei das Umlenkelement mit zumindest einer Wegkomponente in Richtung des Verfahrweges ortsveränderlich zur Basis zwischen der Auslenkposition und der Rückstellposition hin und her verfahrbar angeordnet ist. Die Erfindung betrifft ferner ein Handhabungsgerät, insbesondere einen Industrieroboter, mit dem Führungssystem der vorstehend genannten Art.

Handhabungsgeräte, wie Industrieroboter, weisen beispielsweise an einem bewegbaren Arbeitsende ein Arbeitsgerät als Verbraucher auf, der über Versorgungsleitungen versorgt wird. In der Regel werden die Stränge mit den Versorgungsleitungen an der Struktur der der Roboter entlang geführt. Industrieroboter sind in der Regel für rasche und häufig sehr komplexe Bewegungsabläufe ausgelegt, welches eine besonders präzise Führung der Versorgungsleitungen an oder in dem Strang erfordert, um eine übermäßige Belastung des Stranges und damit der Versorgungsleitungen beispielsweise infolge von Verhakungen oder Verwicklungen an der Roboterstruktur oder Schlaufenbildung der des Stranges zu vermeiden. Dies kann zum Bruch des Stranges und damit der durch den Strang geführten Versorgungsleitung führen. Komplexe Bewegungsabläufe erfordern einen entsprechend großen Längenausgleich bei dem Strang, damit dieser den Bewegungsabläufen des Industrieroboters folgen kann. Im Stand der Technik wird vorgeschlagen, eine Teillänge des Stranges aus der Auslenkungsposition in die Rückstellposition mittels einer Rückstellvorrichtung zurückzubringen.

Die DE 10 2009 037 515 A1 offenbart ein gattungsgemäßes Führungssystem, bei dem die Umlenkführung ein als Formteil ausgebildetes Umlenkelement aufweist, an dem der Umlenkbogen mit Verfahren des Stranges partiell abgleitet. Nachteilig hierbei ist eine erhöhte Belastung des Stranges. Zur Verminderung der mechanischen Belastung sind kleine Zylinderrollen vorgesehen, wodurch die Konstruktion aufwändig wird. Ferner liegen die Zylinderrollen mechanisch ungünstig linienhaft an dem Umlenkbogen an und erstrecken sich zudem lediglich über einen Teilbereich der

Führungsfläche, an der der Umlenkbogen seitlich anliegt. In der WO 97/39505 A1 wird ein weiteres Führungssystem für einen Roboter mit bis zu sechs Freiheitsgraden beschreiben, bei dem der Strang an den Trumen und dem an dem Umlenkelement seitlich anliegenden Umlenkbogen gehalten wird, wobei das Umlenkelement notwendig nicht an der Basis geführt, sondern durch den Strang frei beweglich im Raum gehalten wird. Nachteilig ändern sich mit Verfahren des Stranges konstruktionsbedingt der von den Trumen eingeschlossene Winkel, die Fläche, in der der Umlenkbogen an dem Umlenkelement anliegt, und damit die auf den Strang einwirkenden Kräfte und Kraftmomente.

In der WO2005/123350A1 wird ein Führungssystem beschrieben, wobei zur Rückstellung eines Abschnittes des Stranges eine um den Strang wendelförmig angeordnete Feder in die Auslenkposition hinein ausgelenkt wird, die den Strang mit Zurückfahren des Roboters wieder in die Rückstellposition zurückzieht. Der maximal mögliche Längenausgleich wird durch die Differenz der Federlänge der Feder im entspannten und im zusammengedrückten Zustand der Feder bestimmt.

Bei einem Führungssystem gemäß der DE 20 2010 007 251 U1 greift die Rückstellvorrichtung aufwendig über ein federvorgespanntes Seil an einem als Anschlussstück ausgebildetem Kettenglied kraftwirksam an, um den dort kettenförmigen Strang innerhalb eines Gehäuses in die Rückstellposition hinein zurückzuziehen.

In der DE 10 2007 018 543 A1 wird der Strang vom erste Anschlusspunkt in einem Drehhebel radial nach außen zu einem Anschlusselement geführt, das mit Drehung des Drehhebels unter Abwicklung eines halbkreisförmigen Umlenkbogens auf einem Kreisbogen geführt wird. Zur Rückholung ist auch hier eine den Strang wendelförmig umschließende Feder vorgesehen. Nachteilig ist neben der Verdrillung der Leitungen im ersten Anschlusspunkt der relativ geringe mögliche Längenausgleich des Stranges.

Aufgabe der Erfindung ist, ein gattungsgemäßes Führungssystem bereitzustellen, mittels dessen ein üblicher Strang unaufwändig, sicher und unter möglichst geringer mechanischer Belastung geführt werden kann.

Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird bereits dadurch gelöst, dass das Umlenkelement mittels einer Hebelanordnung bogenförmig, insbesondere kreisbogenförmig, zwischen den Positionen verfahrbar ist.

Hierzu kann die Umlenkvorrichtung einen an der Basis schwenkbeweglich gelagerten Schwenkhebel mit einem freien Endbereich aufweisen, in dem das Umlenkelement angeordnet ist. Hierbei kann die Schwenkachse des Schwenkhebels vorzugsweise senkrecht zur Bodenebene angeordnet sein. Dies stellt eine besonders einfache und mechanisch robuste Lösung mit geringer mechanischer Belastung dar.

Damit kann mit Verfahren des Stranges aus der Rückstellposition in die Auslenkposition ein Verfahren des Stranges über den Verfahrweg unter Ortsveränderung des Umlenkbogens erfolgen, der über seine Ortsveränderung fortwährend seitlich an dem mit dem Umlenkbogen wandernden Umlenkelement abstützt. Das Umlenkelement kann dank seiner ortveränderlichen Verfahrbarkeit zur Basis mit Ausziehen des Stranges in die Auslenkposition hinein mittels Krafteinwirkung des Umlenkbogens mit dem Umlenkbogen mitgeführt werden. Damit kann eine fortwährende Abstützung des Umlenkbogens über den Verfahrweg des Stranges zwischen den Positionen gewährleistet werden. Nach den Gesetzen der Mechanik kann mit einer Bewegung des Umlenkelementes um einen Betrag der Strang gleichzeitig um einen doppelten Betrag verlängert werden. Hierdurch kann die mögliche Längenänderung bei dem erfindungsgemäßen System gegenüber denen der Stand der Technik verdoppelt werden. Dies ermöglicht wiederum eine kompakte bzw. verkleinerte Bauweise des Systems.

Der Umlenkbogen kann an dem Umlenkelement gleit- oder rollverschieblich anliegen. Es versteht sich aus der Mechanik, dass die Abstützung des Umlenkbogens vorzugweise an der Innenseite des Umlenkbogens erfolgen kann. Das Umlenkelement kann eine seitliche Führungsfläche zur Abstützung des Umlenkbogens aufweisen, die sich zumindest etwa senkrecht zu einer Bogenebene erstreckt, in der der Umlenkbogen angeordnet ist. Die Führungsfläche kann ein Querschnittsprofil aufweisen, das vorzugsweise zumindest etwa formkongruent zu der Seitenfläche des Stranges ausbildet ist, mit der der Strang zu seiner Führung an dem Umlenkelement anliegt. Das Umlenkelement kann parallel zur Bodenebene verschieblich angeordnet sein.

Der Mittelpunktswinkel oder der Bogenabschnitt des Umlenkbogens kann größer/gleich 90° bzw. π/2, vorzugsweise größer/gleich 120° bzw. 3/4 n oder idealerweise um 180 ° bzw. n betragen, wobei Letzteres kraftmechanisch am günstigsten ist.

Es kann auch eine Abstützung des Umlenkbogens vorgesehen sein, die zusätzlich zumindest partiell an der Außenseite des Umlenkbogens erfolgen kann. Es kann beispielsweise ein dem Radius des Umlenkbogens angepasstes Rohrbogenelement vorgesehen sein, durch das der Strang zu seiner Führung eingezogen werden kann. Das Rohrbogenelement kann an seinem äußeren Radius einen axialen durchgängigen Schlitz zum Einlegen des Stranges aufweisen.

Das Umlenkelement kann in einfacher Bauweise länglich ausgebildet sein. Es kann sich bezüglich seiner Längserstreckung senkrecht zu der Bogenebene erstrecken. Es kann halbmondartig oder kreissegmentartig mit einer äußeren Umfangsfläche ausgebildet sein, an der der Umlenkbogen gleitverschieblich geführt ist. Es versteht sich, dass bei einer Gleitverschieblichkeit des Umlenkbogens an dem Umlenkelement die seitliche Führungsfläche Reibung mindernd, beispielesweise Teflon beschichtet, ausgebildet sein kann. In der Führungsfläche können beispielsweise kleine vorzugsweise zylindrische Nadelrollen mit einer Drehachse vorzugsweise senkrecht zur Bogenebene angeordnet sein, an denen der Umlenkbogen rollverschieblich anliegt.

In einer bevorzugten Ausbildung des Führungssystems kann das Umlenkelement als bevorzugt senkrecht zur Bogenebene drehbar zur Basis vorzugsweise kugelgelagertes Umlenkrollenelement bzw. Umlenkrolle mit einer äußeren Umfangsfläche als Führungsfläche ausgebildet sein, an der der Umlenkbogen rollverschieblich anliegt.

Die Rückstellvorrichtung kann eine gebogene Führungsschiene für das Umlenkelement aufweisen. In diese Führungsschiene kann das Umlenkelement mit einem endseitigen Abschnitt, der beispielsweise einen Anker aufweist, in die Führungsschiene rollverschieblich oder gleitverschieblich eingreifen.

Das Verfahren des Umlenkelementes und damit das Verfahren des an dem Umlenkelement des anliegenden Umlenkbogens unter Einziehung des Stranges in seine Rückstellposition hinein können, wie bereits bekannt, automatisch erfolgen. Wenn der durch die Versorgungsleitung versorgte Verbraucher an der Handmaschine bzw. an dem Roboter zurück verfährt, kann der Strang entsprechend freigegeben und über die Rückstellvorrichtung in Richtung seiner Rückstellposition zurück gezogen werden. Dies könnte im Prinzip vorzugsweise geregelt mittels eines motorischen Antriebes, wie mittels eines Linearantriebes oder eines Stellmotors, erfolgen. Bevorzugt wird jedoch eine automatische Rückstellung über eine in das Umlenkelement eingeleitete Rückstellkraft einer Kraftvorrichtung. Hierbei kann die Kraftvorrichtung so ausgelegt sein, dass die erzeugte Rückstellkraft beispielsweise über den von dem Verbraucher auf den Strang ausgeübte Zugkraft gesteuert oder vorzugsweise geregelt wird. Damit kann der Strang zu dem Verbraucher hin in einer vorzugsweise konstanten Zugspannung gehalten werden, so dass ein unzulässiges Durchhängen des Stranges vermieden werden kann.

Die Kraftvorrichtung kann auf verschiedenste Weise die erforderliche Rückstellkraft erzeugen und in das Umlenkelement einleiten. Dieses kann beispielsweise pneumatisch, magnetisch, elektromagnetisch und/oder mechanisch, hier insbesondere federmechanisch, erfolgen. Hierzu kann beispielsweise eine pneumatische, magnetische und/oder mechanische Feder eingesetzt werden, die vorzugsweise unmittelbar oder über eine Kraftübersetzung, wie Hebelanordnung oder Getriebe, auf das Umlenkelement kraftwirksam einwirkt. Es kann beispielsweise ein Schwenkhebel mit dem Unlenkelement in seinem freien Endbereich eingesetzt werden, an den zur Verschwenkung seitlich eine pneumatische, magnetische und/oder mechanische Feder angreift.

In einer bevorzugten Ausbildung des Führungssystems ist vorgesehen, dass das Umlenkelement unter Vorspannung in der Rückstellposition angeordnet ist, wobei die Vorspannung zumindest mit einer Richtungskomponente in Richtung der Rückstellkraft weist. Damit kann der Umlenkbogen im Umfange der wirkenden Vorspannung in der Rückholposition lagefixiert werden. Der Einsatz einer rein mechanischen Feder zur Erzeugung der Rückstellkraft hat den Vorteil, dass dieses einfach und mechanisch robust bewerkstelligbar ist. So kann beispielsweise bei der Verwendung des Schwenkhebels mit dem Unlenkelement in seinem freien Endbereich eine einfache Drehfeder eingesetzt werden, die in der Schwenkachse des Schwenkhebels angeordnet ist.

Wird beispielsweise die Rückstellkraft auf pneumatischem Wege, d.h. mittels eines Druckzylinders mit ausfahrendem Druckkolben erzeugt, so kann diese pneumatisch erzeugte Rückstellkraft unaufwändig gesteuert und geregelt werden. Dies hat den Vorteil, dass damit die Rückstellkraft vorteilhaft konstant gehalten werden kann. Es kann somit die gesamte Bewegung des Umlenkelementes über die Höhe und/oder Änderung der Rückstellkraft gesteuert oder geregelt werden. Ferner kann über hierüber der Weg des Umlenkelementes begrenzt werden, so da-ss entsprechende mechanische Endanschläge überflüssig sind.

Zur Erfassung der Rückstellkraft, der Ortsveränderung des Umlenkelementes und/oder eines Anpressdruckes, mit dem Umlenkboden an dem Umlenkelement anliegt, kann zumindest ein Sensor einer Messvorrichtung vorgesehen sein. Hierdurch kann einerseits das Verfahren des Rückstellelementes, abhängig von dem jeweiligen Einsatzort des Führungssystems, optimiert werden. So kann beispielsweise bei Änderung des komplizierten Bewegungsablaufes, insbesondere bei einer Änderung der Verfahrgeschwindigkeit des Verbrauchers, entsprechend die Rückstellkraft über den Verfahrweg eingestellt werden. Ferner können hierüber Endpunkte des Verfahrweges des Umlenkelementes über die Steuerung der Rückstellkraft wahlweise eingestellt werden. Ferner kann über die Sensoren, wie beispielsweise bei einem Abriss des Stranges am Verbraucher, der dadurch höchstens stark verminderte Zugkraft auf das Umlenkelement ausübt, unmittelbar auf das Handhabungsgeräte bzw. den Industrieroboter so eingewirkt werden, dass dieser automatisch abschaltet. Wird beispielsweise ein Gegenstand unzulässig zwischen Strang und Handhabungsgerät derart, dass der Strang hierdurch weiter gespannt wird und somit eine erhöhte Zugkraft auf das Umlenkelement ausübt, so kann auch über die sensorische Ermittlung beispielsweise des Anpressdruckes, mit dem der Umlenkbogen an dem Umlenkelement anliegt, eine Notausschaltung des Handhabungsgerätes bzw. des Industrieroboters erfolgen. Die jeweiligen Sensoren zur die Erfassung der Rückstellkraft, der Ortsveränderung des Umlenkelementes und/oder des Anpressdruckes können, angepasst an die jeweilige Aufgabe, in üblicher Weise ausgebildet sein. Beispielsweise können zur Erfassung der Ortsveränderung des Umlenkelementes Positionssensoren für lineare Wegmessung oder Winkelsensoren der Winkelmessung bei bogenförmiger Ortsveränderung des Umlenkelementes vorgesehen sein. Demnach kann eine Messwertannahme translatorisch oder rotatorisch erfolgen. Hierbei können übliche Positionssensoren geeigneter Bauart in Frage kommen. Diese können beispielsweise lichtoptisch, kapazitiv, induktiv, magnet-induktiv, magneto-striktiv, elektrisch, beispielsweise nach dem Wirbelstromverfahren, oder magnetisch nach dem Halleffekt arbeiten. Dabei kann die Wegmessung als absolute Wegmessung von einem Nullpunkt ausgehen oder als inkrementale Wegmessung, was bevorzugt ist, lediglich die positiven oder negativen Zuwächse des zurückgelegten Weges messen.

Allgemein wird eine berührungslose Erfassung der Ortsveränderung des Umlenkelementes bevorzugt, wie sie beispielsweise auf kapazitive, induktive, magneto-induktive oder magneto-striktive Weise möglich ist. Besonders bevorzugt werden jedoch Potentiometer, d.h. Drehpotentiometer bei Erfassung einer Drehbewegung und Linearpotentiometer bei Erfassung einer lineare Bewegung. Hierbei wird jeweils eine inkrementale Wegmessung bevorzugt, da hierzu keine Nullpunktansteuerung vorgesehen ist.

Der Teil des Stranges, der nicht zu dem Ausgleichsabschnitt gehört, kann zusätzlich mittels zumindest eines weiteren Führungselementes abgestützt und geführt werden. Hierzu kann ein üblicher Führungsring mit Gleitreibung verringernder Beschichtung beispielsweise aus Teflon zum Einsatz kommen, durch den der Strang geführt gleitverschieblich angeordnet ist und der an der Außenstruktur des Handhabungsgerätes vorzugsweise einstellbar montiert ist.

Das Führungssystem kann ein Gehäuse mit Deckel zum Schutz aufweisen. Das Gehäuse kann die Basis als Gehäuseboden aufweisen, an den der Deckel klappbar angelenkt ist. Ferner können zur Montage an dem Handhabungsgerät vorzugsweise an der Basis Halterungsmittel vorgesehen sein.

Das Führungssystem kann somit als Modul mit dem Ausgleichsabschnitt, der Rückstellvorrichtung und der Kraftvorrichtung sowie eventuell mit der Messvorrichtung und Steuerungs- und Regelungseinheit vollständig vorgefertigt werden. Diese Module können in verschiedenen Ausführungen bevorratet werden. Damit kann beispielsweise zum Umrüsten des Handhabungsgerätes bez. des Industrieroboters ein modulares Führungssystem durch ein der Umrüstung angepasstes anderes Führungssystem ausgetauscht oder ergänzt werden. Es können Sets mit einzelnen Baugruppen des Führungssystems bereitgestellt werden. Es können einzelne oder alle Baugruppen vorteilhaft in unterschiedlichen Auslegungen in dem Set enthalten sein.

Die vorliegende Erfindung wird im Folgenden anhand von in einer Zeichnung dargestellten Ausführungsformen des Führungssystems bzw. des Handhabungsgerätes mit dem Führungssystem näher erläutert. In der Zeichnung zeigen:
Fig. 1 eine perspektivische Draufsicht auf eine Ausführungsform eines Führungssystems mit geöffneten Deckel und einem Umlenkelement in einer Rückstellposition,
Figuren 2a bis 2c jeweils eine Seitenansicht der Ausführungsform des Führungssystem gemäß Figur 1,
Fig. 3 eine perspektivische Draufsicht auf die Ausführungsform des Führungssystems gemäß Figur 1, jedoch ohne Deckel jedoch und mit dem Umlenkelement in einer Auslenkposition,
Figuren 4a bis 4c jeweils eine Ansicht der Ausführungsform des Führungssystems gemäß Figur 3,
Figuren 5a und 5b bzw. 6a und 6b jeweils eine Ansicht der Ausführungsform gemäß Figur 1 bzw. Figur 3, jedoch ohne Basis,
Fig. 7 eine Unteransicht des Ausführungsform gemäß Figur 1 ohne Strang,
Fig. 8 eine Ausschnittsvergrößerung XIII gemäß Figur 7,
Fig. 9 eine Unteransicht auf die Ausführungsform des Führungssystems gemäß Figur 3, jedoch ohne Strang,
Fig. 10 eine Ausschnittsvergrößerung X gemäß Figur 9 und
Figuren 11a bis 11c jeweils eine Ansicht eines Industrieroboters mit der Ausführungsform des Führungssystems nach den Figuren 1-10 und mit geschlossenem Deckel.

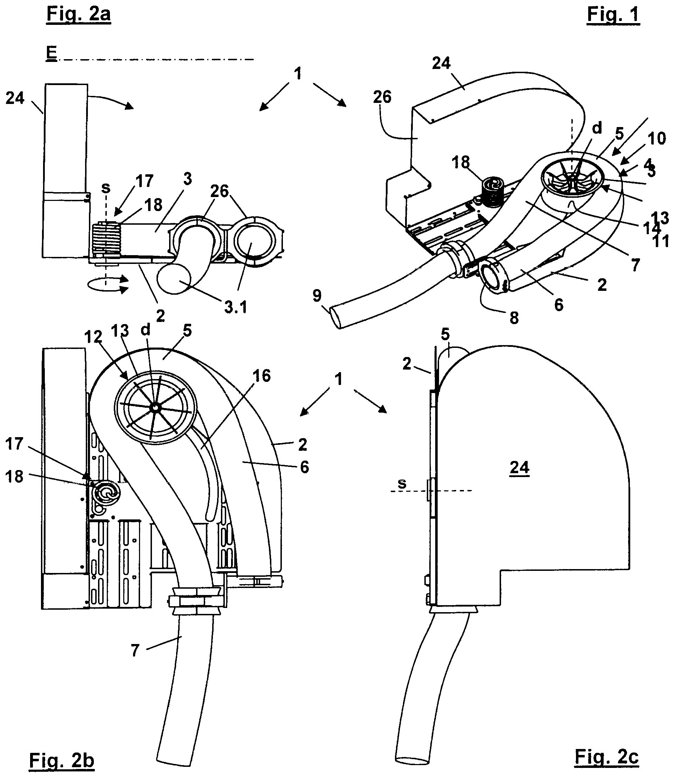

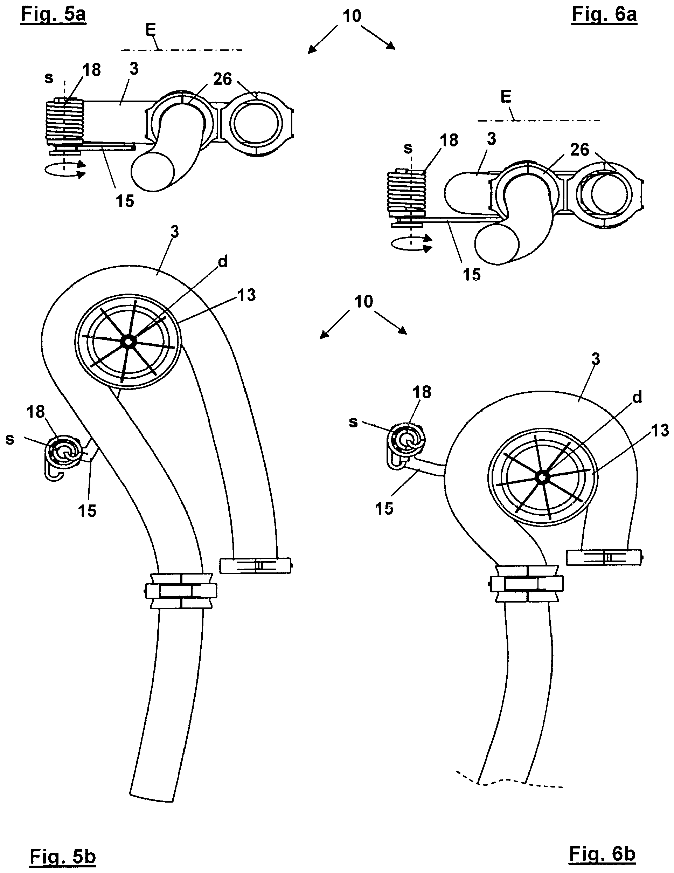

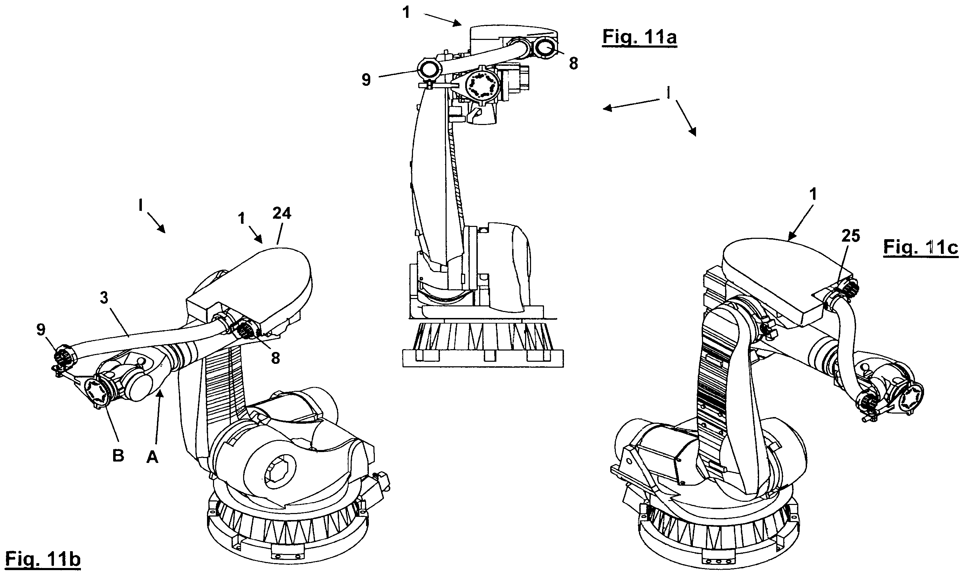

In den Figuren 1 bis 10 wird in verschiedenen Ansichten und Ausschnitten eine Ausführungsform eines Führungssystems 1 bzw. Teile desselben gezeigt. In den Figuren 11a bis 11c wird jeweils in verschiedenen Ansichten ein Industrieroboter I mit der der Ausführungsform des Führungssystems 1 gemäß den Figuren 1 bis 10 gezeigt.

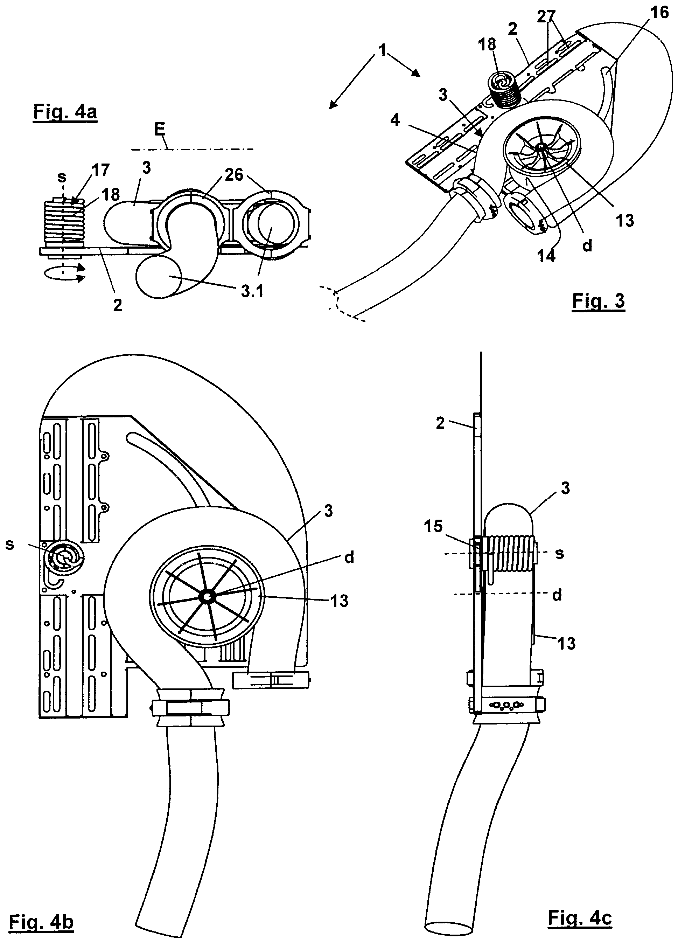

Das Führungssystem 1 ist für hier nicht weiter dargestellte Versorgungsleitungen für ein hier als Industrieroboter I ausgebildetes Handhabungsgerät ausgelegt. Das Führungssystem 1 weist hier eine hier plattenförmige Basis 2 und einen hier kettenförmigen Strang 4 mit kreisrundem Querschnitt und einem Innenraum 3.1 auf, in dem die hier nicht dargestellte Versorgungsleitungen anordenbar sind. Das Führungssystem 1 ist, wie in den Figuren 16 und 17 verdeutlicht, hier ausgelegt, Versorgungsleitungen über den Strang 3 zu einem hier nicht dargestellten, am Ende eines Armes A des Industrieroboter I angeordneten Verbrauchers hinzuführen, wobei der Arm A bezüglich seiner Länge veränderbar ist. Zum Längenausgleich ist der Strang 3 in einem hier allein den Strang 3 darstellenden Ausgleichsabschnitt 4 in zwei über einen Umlenkbogen 5 miteinander verbundenen Trumen 6, 7 mit jeweils einem endseitigen Anschlusspunkt, einen zu der Basis 2 des Führungssystems 1 stationärem ersten Anschlusspunkt 8 und einem zu der Basis 2 bewegbaren zweiten Anschlusspunkt 9, geführt, angeordnet ist. Der zweite Anschlusspunkt 9 ist relativ zum ersten Anschlusspunkt 8 über einen Verfahrweg zwischen einer Auslenkposition (Figuren 3, 4 und 9) in der der Strang 3 ausgefahren ist und einer Rückstellposition (Figuren 1, 2 und 7), in der der Strang 3 eingefahren ist, hin- und her verfahrbar.

Das Führungssystem 1 weist ferner eine Rückstellvorrichtung 10 zur hier automatischen Rückstellung des Stranges 3 in die Rückholposition hinein auf. Die Rückstellvorrichtung 10 weist eine Umlenkführung 11 mit einem Umlenkelement 12 auf. Das Umlenkelement 12 ist hier als Umlenkrolle 13 ausgebildet, wobei die Umlenkrolle 13 um eine Drehachse d senkrecht zu einer Bogenebene E, in der der Umlenkbogen 5 angeordnet ist, frei drehbar gelagert ist. An der Umlenkrolle 13 liegt der Umlenkbogen 5 zu seiner Führung über den Verfahrweg des zweiten Anschlusspunktes 9 rollverschieblich seitlich an. Das Umlenkelement 12 ist zumindest mit einer Wegkomponente in Richtung des Verfahrweges ortsveränderlich zur Basis 2 zwischen der Auslenkposition und der Rückholposition hin- und her verfahrbar angeordnet. Wie aus der Mechanik von Umlenkrollen bekannt , ist der Verfahrweg des zweiten Anschlusspunktes 9 doppelt so groß wie der Weg, den die Umlenkrolle 13 beim Verfahren des ersten Anschlusspunktes 9 durchläuft. Somit kann über den Weg der Umlenkrolle zugleich ein maximaler Verfahrweg eingestellt werden.

Die Umlenkrolle 13 weist eine seitliche Führungsfläche 14 für den Umlenkbogen 5 auf. Die seitliche Führungsfläche 14 ist der Außenkontur des Umlenkbogens 5 angepasst, d.h. hier, entsprechend dem kreisförmigen Querschnitt des Stranges 3, konkav halbkreisförmig ausgebildet.

Das Umlenksystem wird in der in der Zeichnung dargestellten Ausführungsform des Führungssystems 1 auf einem kreisbogenförmigen Weg verfahren
Hierzu weist die Rückstellvorrichtung 10 des Führungssystems 1 einen Schwenkhebel 15 auf, der um eine Schwenkachse s parallel zur Drehachse d der Umlenkrolle 13 verschwenkbar an der Basis 2 angelagert ist. Die Umlenkrolle 13 ist an von der Schwenkachse s beabstandeten freien Ende des Schwenkhebels 15 drehbar gelagert. Der Schwenkhebel 15 ist hier unterhalb der Basis 2 angeordnet, so dass die oberhalb der Basis 2 angeordnete Umlenkrolle mit seiner Drehachse d durch die Basis 2 an dem Schwenkhebel 15 angreift. Hierzu ist in die Basis 2 ein bogenförmiger Schlitz 16 angebracht, der zugleich einen maximalen Weg für das Umlenkrollenelement 13 markiert.

Zur automatischen Rückstellung des Umlenkelementes 12 in seine Rückstellposition hinein ist eine Kraftvorrichtung 17 zur Erzeugung und Einleitung einer Rückstellkraft in das Umlenkelement 12 vorgesehen.

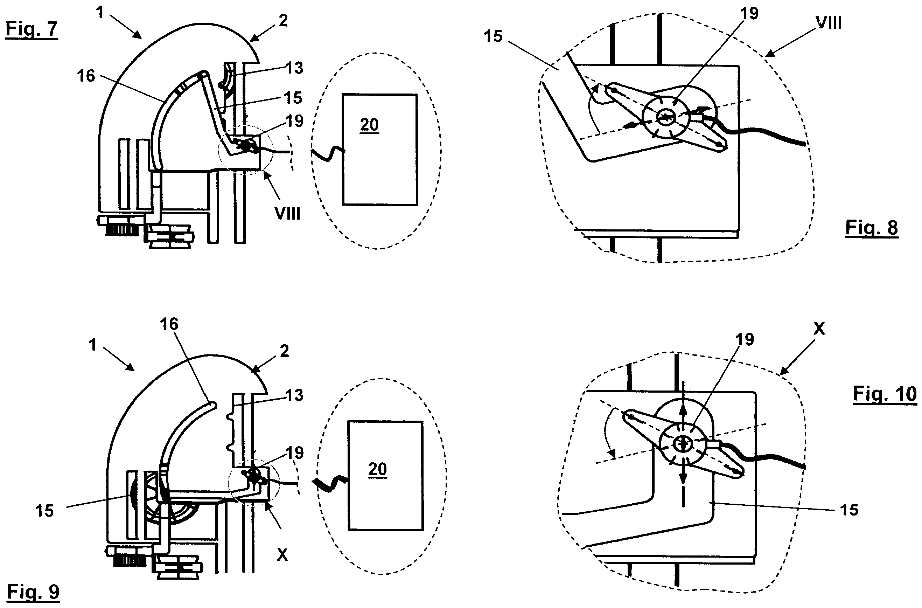

Das Umlenkelement 12 liegt in der Rückstellposition unter Vorspannung endseitig an dem Schlitz 16 an. Als Kraft erzeugendes Element ist hier eine Drehfeder 18 vorgesehen, gegen deren Federkraft der Schwenkhebel 15 aus der Rückstellposition heraus in Richtung zur Auslenkposition hin ausgelenkt wird. Zur Messung des Verfahrens des Umlenkelementes 12 über den Weg längs des Schlitzes 16 ist ein Winkelsensor 19 vorgesehen, der, wie in den Figuren 7 bis 10 gezeigt, unterseitig der Schwenkachse s des Schwenkhebels 15 angeordnet ist. Der Winkelgeber 19 ist hier als inkrementaler Hall-Sensor ausgebildet, der vorteilhaft berührungslos arbeitet. Der Winkelsensor 19 ist, wie in den Figuren 7 und 9 rein schematisch gezeigt, mit einer Steuerungs- und Regelungseinheit 20 verbunden, über die auf die Steuerung
und Regelung eines Industrieroboters I (siehe Figuren 11a-11c) unter anderem derart Einfluss genommen werden kann, dass der Industrieroboter I bei einem schlagartigen Verschwenken des Schwenkhebels 15 automatisch ausgeschaltet wird.

Für das Führungssystem 1 ist ein an der Basis 2 klappbar angelenkter Deckel 24 vorgesehen. Beide Trume 6, 7 des Ausgleichsabschnitts sind endseitig zum Anschluss beispielsweise an weitere Teile des Stranges 3 oder, wie in den Figuren 11a)-11c) gezeigt, zum Anschluss an ein Arbeitsende B des Armes A, von außen an von Basis 2 und Deckel 24 begrenzte Öffnungen 25 erreichbar. Beide Öffnungen 25 umrahmen jeweils ein zur Basis 2 stationäres ringartiges Führungselement 26, wobei das Führungselement 26 für denersten Anschlusspunkt 8 zugleich als stationäre Halterung dient, während das andere Führungselement 26 als Gleitring ausgebildet ist, durch welchen das Trum 7 mit dem bewegbaren Anschlusspunkt 9 gleitverschieblich geführt ist. Zur Festlegung des Führungssystems 1 an dem Industrieroboter I sind unterseitig der Basis 2 Halterungsmittel 27 vorgesehen.

### Bezugszeichenliste

- 1: Führungssystem
- 2: Basis
- 3: Strang
- 3.1: Innenraum
- 4: Ausgleichsabschnitt
- 5: Umlenkbogen
- 6: Trum
- 7: Trum
- 8: erster Anschlusspunkt
- 9: zweiter Anschlusspunkt
- 10: Rückstellvorrichtung
- 11: Umlenkführung
- 12: Umlenkelement
- 13: Umlenkrolle
- 14: Führungsfläche
- 15: Schwenkhebel
- 16: Schlitz
- 17: Kraftvorrichtung
- 18: Drehfeder
- 19: Winkelsensor
- 20: Steuerungs- und Regelungseinheit
- 24: Deckel
- 25: Öffnung
- 26: Führungselement
- 27: Halterungsmittel
- A: Arm
- B: Arbeitsende
- E: Bogenebene
- I: Industrieroboter
- d: Drehachse
- s: Schwenkachse

## Patentansprüche

1. Führungssystem (1) für Versorgungsleitungen für ein Handhabungsgerät, insbesondere für einen Industrieroboter (I), mit einer Basis (2) und einem ketten-, schlauch- oder bandartigen Strang (3), in oder an dem die Versorgungsleitungen anordenbar sind, wobei der Strang (3) zum Längenausgleich in einem Ausgleichsabschnitt (4) in zwei über einen Umlenkbogen (5) miteinander verbundenen Trumen (6, 7) mit jeweils einem endseitigen Anschlusspunkt, einem zu der Basis (2) des Führungssystems (1) stationären ersten Anschlusspunkt (8) und einem zu der Basis (2) bewegbaren zweiten Anschlusspunkt (9), geführt angeordnet ist, der zweite Anschlusspunkt (9) relativ zum ersten Anschlusspunkt (8) über einen Verfahrweg (V) zwischen einer Auslenkposition, in der der Strang (3) ausgefahren ist, und einer Rückstellposition, in der der Strang (3) eingefahren ist, hin und her verfahrbar ist und das Führungssystem (1) eine Rückstellvorrichtung (10) zur Rückstellung des Stranges (3) in die Rückstellposition hinein aufweist, die Rückstellvorrichtung (10) eine Umlenkungsführung (11) mit einem Umlenkelement (12) aufweist, an dem sich der Umlenkbogen (5) zu seiner Führung über den Verfahrweg (v) seitlich abstützt, und das Umlenkelement (12) mit zumindest einer Wegkomponente in Richtung des Verfahrweges (v) ortsveränderlich zur Basis (2) zwischen der Auslenkposition und der Rückstellposition hin und her verfahrbar angeordnet ist, **dadurch gekennzeichnet, dass** das Umlenkelement (12) mittels einer Hebelanordnung bogenförmig, insbesondere kreisbogenförmig, zwischen den Positionen verfahrbar ist.

2. Führungssystem nach Anspruch 1, **dadurch gekennzeichnet, dass** das Umlenkelement (12) eine seitliche Führungsfläche (14) für den Umlenkbogen (5) aufweist, die sich zumindest etwa senkrecht zu einer Bogenebene (E) erstreckt, in der der Umlenkbogen (5) angeordnet ist.

3. Führungssystem nach Anspruch 2, **dadurch gekennzeichnet, dass** das Umlenkelement (12) als Umlenkrolle (13) ausgebildet ist, das senkrecht zur Bogenebene (E) drehbar zur Basis (2) gelagert ist und an dem der Umlenkbogen (5) seitlich anliegt.

4. Führungssystem nach einem der Ansprüche 1 bis 3, **dadurch gekennzeichnet, dass** die Rückstellvorrichtung (10) eine gebogene Führungsschiene (21) für das Umlenkelement (12) aufweist, in die das Umlenkelement (12) mit einem endseitigen Abschnitt verschieblich eingreift.

5. Führungssystem nach einem der Ansprüche 1 bis 4, **dadurch gekennzeichnet, dass** die Umlenkvorrichtung einen an der Basis (2) um eine Schwenkachse (s) parallel zur Längserstreckung des Umlenkelementes (12) schwenkbeweglich gelagerten Schwenkhebel (15) mit einem freien Endbereich aufweist, in dem das Umlenkelement (12) angeordnet ist.

6. Führungssystem nach einem der Ansprüche 1 bis 5, **dadurch gekennzeichnet, dass** das Trum (7) mit dem zweiten Anschlusspunkt (9) durch ein zur Basis (2) stationäres Führungselement (26), insbesondere durch einen Gleitring, unter gleit- oder rollverschieblicher seitlichen Anlage an demselben geführt angeordnet ist.

7. Führungssystem nach einem der Ansprüche 1 bis 6, **dadurch gekennzeichnet, dass** die Rückstellvorrichtung (10) zur automatischen Rückstellung eine Kraftvorrichtung (17) zur Einleitung einer Rückstellkraft in das Umlenkelement (12) aus der Auslenkposition in die Rückstellposition hinein aufweist.

8. Führungssystem nach Anspruch 7, **dadurch gekennzeichnet, dass** die Einleitung der Rückstellkraft pneumatisch, magnetisch, elektromagnetisch und/oder mechanisch, insbesondere federmechanisch erfolgt.

9. Führungssystem nach einem der Ansprüche 1 bis 8, **dadurch gekennzeichnet, dass** das Umlenkelement (12) unter Vorspannung in der Rückstellposition angeordnet ist.

10. Führungssystem nach einem der Ansprüche 1 bis 9, **dadurch gekennzeichnet, dass** die Höhe und/oder Änderung der Rückstellkraft gesteuert oder geregelt ist.

11. Führungssystem nach einem der Ansprüche 1 bis 10, **dadurch gekennzeichnet, dass** eine Messvorrichtung mit einem Sensor zur Erfassung der Rückstellkraft, der Ortsveränderung des Umlenkelementes (12) und/oder eines Anpressdruckes, mit dem der Umlenkbogen (5) an dem Umlenkelement (12) anliegt, vorgesehen ist.

12. Führungssystem nach Anspruch 7 und 11, **dadurch gekennzeichnet, dass** der Sensor ein Signal zur Steuerung oder Regelung der Rückstellkraft erzeugt.

13. Handhabungsgerät, insbesondere Industrieroboter (I), mit einem Führungssystem (1) gemäß einem der Ansprüche 1 bis 12 für Versorgungsleitungen mit einer Basis (2) und einem ketten-, schlauch- oder bandartigen Strang (3), in oder an dem die Versorgungsleitungen anordenbar sind.

14. Handhabungsgerät, insbesondere Industrieroboter (I), nach Anspruch 13, wobei das Führungssystem (1) eine Messvorrichtung mit einem Messsignale erzeugenden Sensor zur Erfassung der Rückstellkraft, der Ortsveränderung des Umlenkelementes (12) und/oder eines Anpressdruckes, mit dem der Umlenkbogen (5) an dem Umlenkelement (12) anliegt, aufweist, **dadurch gekennzeichnet, dass** die Messsignale mit einer vorgesehenen Steuerung oder Regelung des Handhabungsrätes bzw. Industrieroboters (I) verknüpfbar sind.

## Claims

1. A guide system (1) for supply lines for a handling apparatus, in particular for an industrial robot (I), comprising a base (2) and a chain-like, hose-like or strip-like carrier member (3), in or on which the supply lines can be arranged, wherein the carrier member (3) is arranged guided for length compensation purposes in a compensating portion (4) in two runs (6, 7) connected together by way of a direction-changing bend (5) with respective end connecting points, a first connecting point (8) which is stationary relative to the base (2) of the guide system (1) and a second connecting point (9) which is movable relative to the base (2), the second connecting point (9) is reciprocable relative to the first connecting point (8) over a displacement travel (V) between a deflection position in which the carrier member (3) is extended and a return position in which the carrier member (3) is retracted, and the guide system (1) has a return device (10) for returning the carrier member (3) into the return position, the return device (10) has a direction-changing guide (11) with a direction-changing element (12) at which the direction-changing bend (5) is supported laterally for guidance thereof over the displacement travel (V) and the direction-changing element (12) is arranged reciprocably in variable-position relationship with at least one travel component in the direction of the displacement travel (v) relative to the base (2) between the deflection position and the return position, **characterised in that** the direction-changing element (12) is displaceable between the positions by means of a lever arrangement in an arcuate shape, in particular in the shape of a circular arc .

2. A guide system according to claim 1 **characterised in that** the direction-changing element (12) has a lateral guide surface (14) for the direction-changing bend (5), which surface extends at least approximately perpendicularly to a bend plane (E) in which the direction-changing bend (5) is arranged.

3. A guide system according to claim 2 **characterised in that** the direction-changing element (12) is in the form of a direction-changing roller (13) which is mounted perpendicularly to the bend plane (E) rotatably relative to the base (2) and against which the direction-changing bend (5) laterally bears.

4. A guide system according to one of claims 1 to 3 **characterised in that** the return device (10) has a curved guide rail (21) for the direction-changing element (12), into which the direction-changing element (12) displaceably engages with an end portion.

5. A guide system according one of claims 1 to 4 **characterised in that** the direction-changing device has a pivotal lever (15) which is mounted to the base (2) pivotably about a pivot axis (s) parallel to the longitudinal extent of the direction-changing element (12) and which has a free end region in which the direction-changing element (12) is arranged.

6. A guide system according to one of claims 1 to 5 **characterised in that** the run (7) with the second connecting point (8) is arranged guided through a guide element (26) which is stationary relative to the base (2), in particular through a slide ring, bearing laterally thereagainst in slidingly displaceable or rollingly displaceable relationship.

7. A guide system according to one of claims 1 to 6 **characterised in that** the return device (10) for automatic return has a force device (17) for applying a return force to the direction-changing element (12) from the deflection position to the return position.

8. A guide system according to claim 7 **characterised in that** the return force is applied pneumatically, magnetically, electromagnetically and/or mechanically, in particular spring-mechanically.

9. A guide system according to one of claims 1 to 8 **characterised in that** the direction-changing element (12) is arranged in a prestressed condition in the return position.

10. A guide system according to one of claims 1 to 9 **characterised in that** the magnitude of and/or the change in the return force is controlled or regulated.

11. A guide system according to one of claims 1 to 10 **characterised in that** there is provided a measuring device having a sensor for detecting the return force, the change in location of the direction-changing element (12) and/or a pressing pressure with which the direction-changing bend (5) bears against the direction-changing element (12).

12. A guide system according to claim 7 and 11 **characterised in that** the sensor produces a signal for controlling or regulating the return force.

13. A handling apparatus, in particular an industrial robot (I) having a guide system (1) according to one of claims 1 to 12 for supply lines comprising a base (2) and a chain-like, hose-like or strip-like carrier member (3), in or on which the supply lines can be arranged.

14. A handling apparatus, in particular an industrial robot (I), according to claim 13, wherein the guide system (1) has a return device (10) for returning the carrier member (3) into the return position, the return device (10) has a direction-changing guide (11) having a direction-changing element (12) against which the direction-changing bend (5) is laterally supported for guidance thereof over the displacement travel (v) and the guide system (1) has a measuring device with a sensor producing measurement signals for detection of the return force, the change in location of the direction-changing element (12) and/or a pressing pressure with which the direction-changing bend (5) bears against the direction-changing element (12), **characterised in that** the measuring signals can be linked to a provided control or regulation of the handling apparatus or industrial robot (I).

## Revendications

1. Système de guidage (1) pour lignes d'alimentation pour un dispositif de manutention, en particulier pour un robot industriel (I), comprenant une base (2) et un brin (3) en forme de chaîne, de tuyau ou de bande dans ou sur lequel les lignes d'alimentation peuvent être disposées, le brin (3), pour une compensation de longueur dans une section de compensation (4), étant disposé de manière guidée en deux troncs (6, 7) qui sont reliés entre eux par un arc de renvoi (5) comportant chacun un point de raccordement d'extrémité, un premier point de raccordement (8) fixe par rapport à la base (2) du système de guidage (1) et un deuxième point de raccordement (9) mobile par rapport à la base (2), le deuxième point de raccordement (9) peut être déplacé d'avant en arrière par rapport au premier point de raccordement (8) sur un trajet de déplacement (V) entre une position d'excursion dans laquelle le brin (3) est étendu, et une position de retour, dans laquelle le brin (3) est rétracté, et le système de guidage (1) présente un dispositif de retour en position (10) pour retourner le brin (3) dans la position de retour, le dispositif de retour en position (10) présente un guide de renvoi (11) avec un élément de renvoi (12), sur lequel l'arc de renvoi (5) est soutenu latéralement pour son guidage sur le trajet de déplacement (v), et l'élément de renvoi (12) est disposé avec au moins un composant de trajet de telle sorte qu'il peut être déplacé en va-et-vient entre la position d'excursion et la position de retour en position dans la direction du trajet de déplacement (v) de manière mobile par rapport à la base (2), **caractérisé en ce que** l'élément de renvoi (12) peut être déplacé entre les positions en forme d'arc, notamment en forme d'arc de cercle, par un dispositif à levier.

2. Système de guidage selon la revendication 1, **caractérisé en ce que** l'élément de renvoi (12) présente une surface de guidage latérale (14) pour l'arc de renvoi (5) qui s'étend au moins sensiblement perpendiculairement par rapport à un plan d'arc (E) dans lequel est disposée l'arc de renvoi (5).

3. Système de guidage selon la revendication 2, **caractérisé en ce que** l'élément de renvoi (12) est conçu comme poulie de renvoi (13) supportée perpendiculairement part rapport au plan d'arc (E) de manière rotative par rapport à la base (2) et sur lequel l'arc de renvoi (5) s'applique latéralement.

4. Système de guidage selon l'une des revendications 1 à 3, **caractérisé en ce que** le dispositif de retour en position (10) présente un rail de guidage incurvé (21) pour l'élément de renvoi (12) dans lequel l'élément de renvoi (12) s'engage de manière déplaçable avec une partie d'extrémité.

5. Système de guidage selon l'une des revendications 1 à 4, **caractérisé en ce que** le dispositif de retour en position comporte un levier pivotant (15) qui est monté sur la base (2) de manière à pouvoir pivoter autour d'un axe de pivotement (s) parallèle à l'extension longitudinale de l'élément de renvoi (12) et comporte une région d'extrémité libre dans laquelle est disposé l'élément de renvoi (12).

6. Système de guidage selon l'une des revendications 1 à 5, **caractérisé en ce que** le tronc (7) avec le deuxième point de raccordement (9) est guidé par un élément de guidage (26) fixe par rapport à la base (2), en particulier par une bague coulissante, avec un contact latéral coulissant ou déplaçable par roulement avec celui-ci.

7. Système de guidage selon l'une des revendications 1 à 6, **caractérisé en ce que** le dispositif de retour en position (10) pour le retour automatique comprend un dispositif de force (17) pour introduire une force de rappel dans l'élément de renvoi (12) de la position d'excursion à la position de retour.

8. Système de guidage selon la revendication 7, **caractérisé en ce que** la force de rappel est introduite de manière pneumatique, magnétique, électromagnétique et/ou mécanique, en particulier de manière mécanique par ressort.

9. Système de guidage selon l'une des revendications 1 à 8, **caractérisé en ce que** l'élément de renvoi (12) est disposé sous précontrainte dans la position de retour.

10. Système de guidage selon l'une des revendications 1 à 9, **caractérisé en ce que** le niveau et/ou la variation de la force de rappel est commandé ou réglé.

11. Système de guidage selon l'une des revendications 1 à 10, **caractérisé en ce qu'**il est prévu un dispositif de mesure avec un capteur pour détecter la force de rappel, le changement de position de l'élément de renvoi (12) et/ou une pression de contact, avec lequel l'arc de renvoi (5) s'applique contre l'élément de renvoi (12).

12. Système de guidage selon les revendications 7 et 11, **caractérisé en ce que** le capteur produit un signal pour commander ou régler la force de rappel.

13. Dispositif de manutention, en particulier robot industriel (I), avec un système de guidage (1) selon l'une quelconque des revendications 1 à 12 pour des lignes d'alimentation comprenant une base (2) et un brin (3) en forme de chaîne, de tuyau ou de bande dans ou sur lequel les lignes d'alimentation peuvent être disposées.

14. Dispositif de manutention, en particulier robot industriel (I), selon la revendication 13, dans lequel le système de guidage (1) comprend un dispositif de mesure avec un capteur produisant des signaux pour détecter la force de rappel, le changement de position de l'élément de renvoi (12) et/ou une pression de contact, avec lequel le coude s'applique contre l'élément de renvoi (12), **caractérisé en ce que** les signaux de mesure peuvent être combinés avec un dispositif de commande ou de régulation du dispositif de manutention ou du robot industriel (I).
